# EUROPEAN PATENT SPECIFICATION

(11) **EP 2 199 167 B1**
(45) Date of publication and mention of the grant of the patent: **14.11.2012**
(21) Application number: 08171772.0
(22) Date of filing: 16.12.2008
(51) Int. Cl.: B60T 17/06

(54) **Fastening system for compressed air reservoir for industrial or commercial vehicle**
Befestigungssystem für Druckluftspeicher für Industrie- und Nutzfahrzeuge
Système de fixation pour réservoir d'air comprimé pour véhicule industriel ou commercial

(43) Date of publication of application: 23.06.2010
(73) Proprietor: IVECO MAGIRUS AG, D-89079 Ulm (DE)
(72) Inventor: Stuerner, Johann, 89079 Ulm (DE); Distelrath, Heinz-Peter, 89079 Ulm/Goegglingen (DE); Nandi, Kiron, 89073 Ulm (DE); Pohl, Harald, 89155 Erbach (DE)
(74) Representative: Borsano, Corrado

(56) References cited:
- EP-A- 0 926 034
- EP-A- 1 970 273
- DE-A1-102006 010 185
- DE-A1-102006 043 585
- DE-U1- 29 822 006
- JP-A- 8 282 720

## Description

### Application field of the invention

The present invention refers to a fastening system for compressed air reservoir for industrial or commercial vehicle.

### Description of the prior art

Industrial or commercial vehicles are equipped with one or more compressed air reservoirs used for the activation of pneumatic devices.

Document EP-A-1 970 273 discloses a fastening system for at least one compressed air reservoir, said fastening system engaging with the frame on a lateral side wall of the reservoir.

The reservoirs of the type known are generally formed by an elongated cylindrical tank and are fixed to the frame, in parallel or perpendicular position with respect to the side members, by means of a bracket that supports it and that is parallel to the reservoir itself, or by means of other types of supports that are also used to accommodate other elements such as batteries or other.

Moreover there are also elastic bands, typically steel bands, that surround the reservoir and fasten it, possibly leaving a hollow space or using a rubber lining, in order to avoid sliding contacts which may provoke dangerous sparks near the reservoirs, and also in order to avoid scratches on the external surface of the reservoir which may rust.

These tank support elements are bulky, heavy and expensive.

### Summary of the invention

Therefore the aim of the present invention is to provide a fastening system for compressed air reservoirs for industrial or commercial vehicle, that is light and cheap.

The present invention relates to a fastening system for compressed air reservoirs for an industrial or commercial vehicle, said vehicle comprising a frame to which said reservoirs are fastened, said fastening system engaging with the frame, and only with the side of the tank facing the frame.

The present invention relates in particular to a fastening system for compressed air reservoirs for industrial or commercial vehicles, as described more fully in the claims, which are an integral part of this description.

### Brief description of the Figures

Further purposes and advantages of the present invention will become clear from the following detailed description of a preferred embodiment (and relative alternative embodiments) and the drawings that are attached hereto, which are merely illustrative and not limitative, in which:
figures from 1 to 14 show different embodiments of the fastening system for compressed air reservoirs according to the present invention.

In the drawings the same reference numbers and letters are used to identify the same elements or components.

### Detailed description of preferred embodiments of the invention

According to the present invention the reservoir, which may be made of metal or of plastic, is fastened to the frame by means of a fastening system which engages only with the side of the reservoir facing the frame, so that all the other support elements of the type known described above may be removed.

Different embodiments of the fastening system described below are possible.

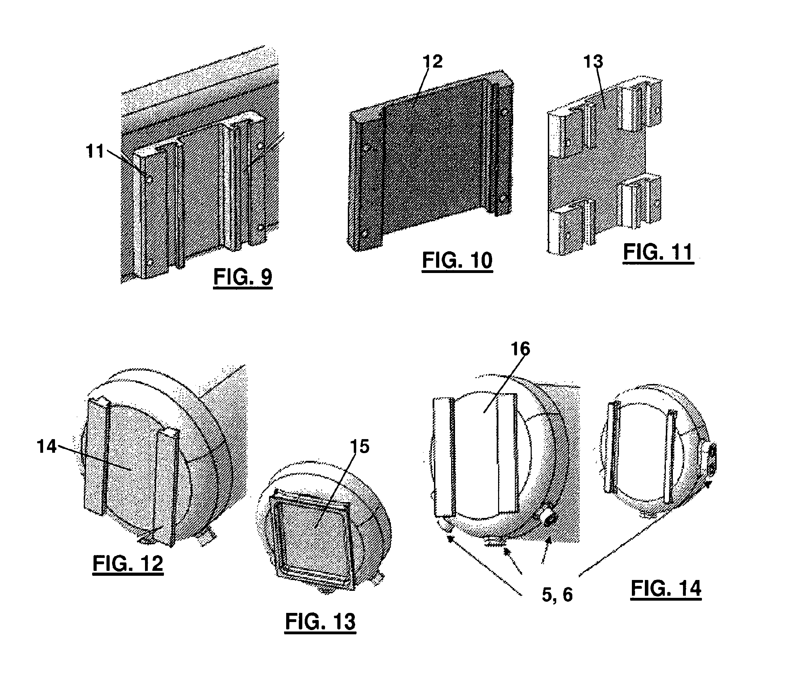

A typical reservoir is usually provided with a side where there are pneumatic junctures for the input/output of the compressed air: in fig. 1 they are in central position 1, 2; in fig. 2 they are misaligned 3, 4 (fig. 2 shows a misalignment in the lower part of the side, but other misalignment positions are possible); in fig. 14 they are in lateral position 5, 6.

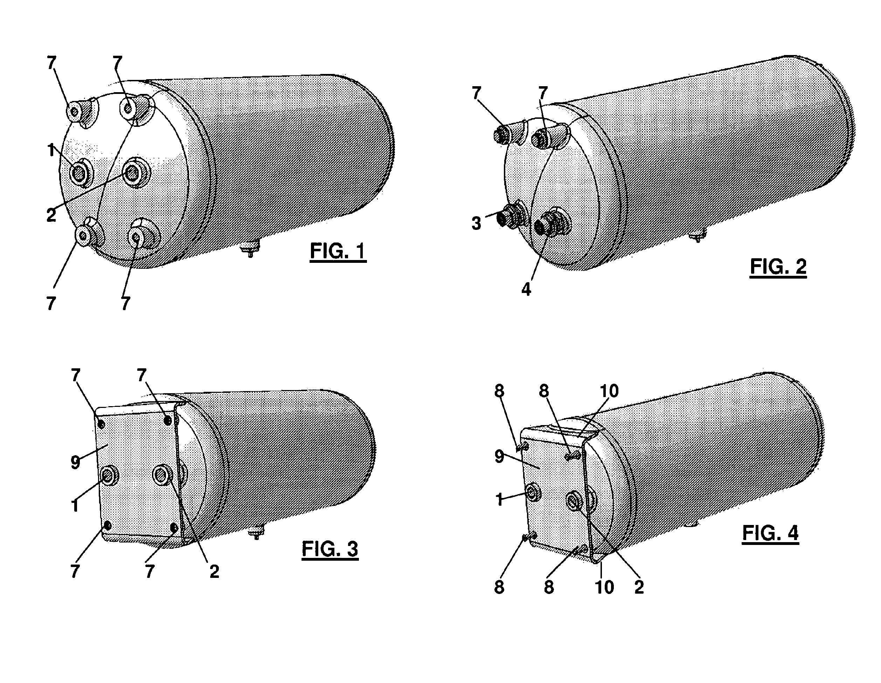

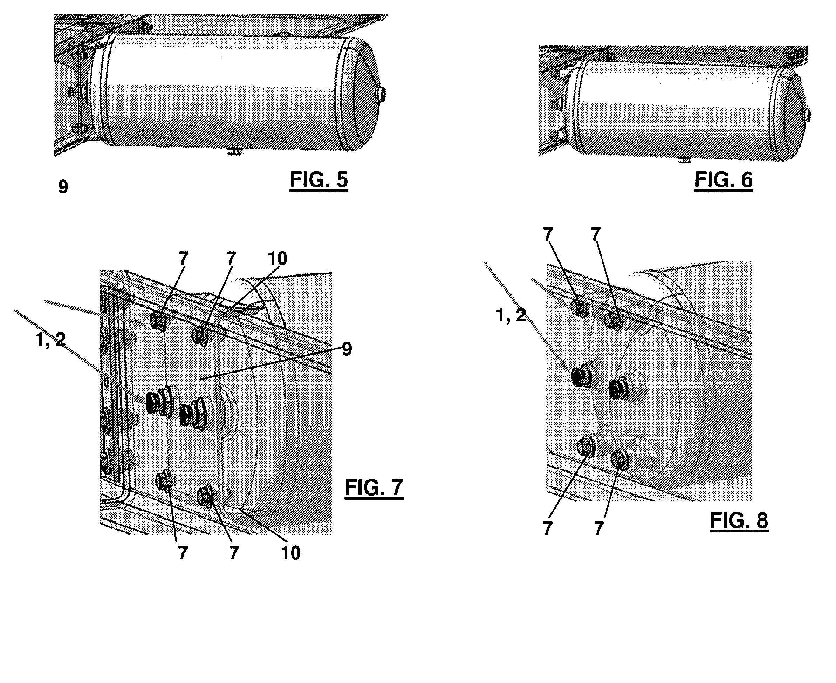

On this side there are fastening bosses 7 or through junctures 8 in addition to the pneumatic junctures 3, 4, that may be also used as fastening bosses.
The bosses may be fixed directly to the frame, for example by means of screws, (figures 6, 8), or by means of a plate 9 (figures 3, 4). The plate is in its turn fixed, for example welded, to the frame (figures 5, 7), by means of extensions, which may also engage directly with the side of the reservoir.

According to further embodiments, shown in the figures from 9 to 13, the fixing system comprises joint guides, comprising a part fixed to the frame (elements 11, 12, 13) which engages with a part fixed to the side of the reservoir (elements 14, 15, 16). The two parts are equipped with joint rails with appropriate complementary shape.

In this case it is preferable to use reservoirs equipped with lateral pneumatic junctures 5, 6, which do not interfere with the joint guides.
These shapes allow to distribute the bending moment of the reservoir (which is projecting) on a wider supporting surface.
An extension of the elements 11, 12, 13 is also possible in order to mount more than one reservoir.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details.

## Claims

1. Fastening system for at least one compressed air reservoir for an industrial or commercial vehicle, said vehicle comprising a frame to which said reservoirs are fastened, said fastening system engaging with the frame, and only with the side of said at least one reservoir facing the frame, wherein said at least one reservoir comprises a front wall wherein there are pneumatic junctures for the input/output of the compressed air (1, 2, 3, 4, 5, 6), **characterized in that** the fastening system comprises on said front wall fastening means for fixing said at least one reservoir directly to the frame.

2. Fastening system according to claim 1, wherein said fastening means comprise fastening bosses (7) or through junctures (8).

3. Fastening system according to claim 2, wherein said pneumatic junctures are part of the fastening system.

4. Fastening system according to claim 2 or 3, further comprising a plate (9) between said fastening bosses (7) or through junctures (8) and said frame.

5. Fastening system according to claim 4, wherein said plate is fixed to the frame by means of extensions (10), which engage also directly to said front wall of said at least one reservoir.

6. Fastening system according to claim 1, wherein said fastening system comprises on said front wall joint guides, comprising a first part fixed to the frame (11, 12, 13) which engages with the second part fixed to the side of said at least one reservoir (elements 14, 15, 16), said first and second part being equipped with joint rails.

7. Fastening system according to claim 6, wherein said pneumatic junctures are in lateral position on said front wall.

## Patentansprüche

1. Befestigungssystem für zumindest ein Druckluftreservoir für ein industrielles oder kommerzielles Fahrzeug, wobei das Fahrzeug einen Rahmen umfasst, an dem die Reservoirs befestigt sind, wobei das Befestigungssystem mit dem Rahmen und nur mit der Seite des zumindest einen Reservoirs, die zu dem Rahmen weist, in Eingriff steht, wobei das zumindest eine Reservoir eine Vorderwand umfasst, wobei pneumatische Verbindungen für den Eingang/Ausgang der Druckluft (1, 2, 3, 4, 5, 6) vorgesehen sind,
**dadurch gekennzeichnet, dass** das Befestigungssystem ein Vorderwand-Befestigungsmittel zum Anbringen des zumindest einen Reservoirs direkt an dem Rahmen umfasst.

2. Befestigungssystem nach Anspruch 1,
wobei das Befestigungsmittel Befestigungsvorsprünge (7) oder Durchgangsverbindungen (8) umfasst.

3. Befestigungssystem nach Anspruch 2,
wobei die pneumatischen Verbindungen Teil des Befestigungssystems sind.

4. Befestigungssystem nach einem der Ansprüche 2 oder 3, ferner mit einer Platte (9) zwischen den Befestigungsvorsprüngen (7) oder Durchgangsverbindungen (8) und dem Rahmen.

5. Befestigungssystem nach Anspruch 4,
wobei die Platte an dem Rahmen mittels von Verlängerungen (10) angebracht ist, die auch direkt mit der Vorderwand des zumindest einen Reservoirs in Eingriff stehen.

6. Befestigungssystem nach Anspruch 1,
wobei das Befestigungssystem an der Vorderwand Kopplungsführungen umfasst, die ein erstes Teil, das an dem Rahmen (11, 12, 13) angebracht ist, umfasst, das mit dem zweiten Teil in Eingriff steht, das an der Seite des zumindest einen Reservoirs (Elemente 14, 15, 16) angebracht ist, wobei das erste und zweite Teil mit Kopplungsschienen ausgestattet sind.

7. Befestigungssystem nach Anspruch 6,
wobei die pneumatischen Verbindungen sich in seitlicher Position an der Vorderwand befinden.

## Revendications

1. Système de fixation pour au moins un réservoir d'air comprimé pour un véhicule industriel ou commercial, ledit véhicule comprenant un cadre, auquel lesdits réservoirs sont fixés, ledit système de fixation s'engageant avec le cadre, et seulement avec le côté dudit au moins un réservoir faisant face au cadre, dans lequel ledit au moins un réservoir comprend une paroi avant, dans laquelle se trouvent des jonctions pneumatiques pour l'entrée et la sortie de l'air comprimé (1, 2, 3, 4, 5, 6), **caractérisé en ce que** le système de fixation comprend sur ladite paroi avant des moyens de fixation pour la fixation dudit au moins un réservoir directement sur le cadre.

2. Système de fixation selon la revendication 1, dans lequel lesdits moyens de fixation comprennent des bossages de fixation (7) ou des jonctions traversantes (8).

3. Système de fixation selon la revendication 2, dans lequel lesdites jonctions pneumatiques font partie du système de fixation.

4. Système de fixation selon la revendication 2 ou 3, comprenant en outre une plaque (9) entre lesdits bossages de fixation (7) ou jonctions traversantes (8) et ledit cadre.

5. Système de fixation selon la revendication 4, dans lequel ladite plaque est fixée au cadre à l'aide d'extensions (10) qui s'engagent directement aussi sur ladite paroi avant dudit au moins un réservoir.

6. Système de fixation selon la revendication 1, dans lequel ledit système de fixation comprend sur ladite paroi avant des guides de joint comprenant une première partie fixée au cadre (11, 12, 13) qui s'engage avec la seconde partie fixée au côté dudit au moins un réservoir (éléments 14, 15, 16), lesdites première et seconde parties étant équipées de rails de joint.

7. Système de fixation selon la revendication 6, dans lequel lesdites jonctions pneumatiques sont en position latérale sur ladite paroi avant.
